# EUROPÄISCHE PATENTSCHRIFT

(11) **EP 1 098 728 B1**
(45) Veröffentlichungstag und Bekanntmachung des Hinweises auf die Patenterteilung: **27.02.2002**
(21) Anmeldenummer: 99941440.2
(22) Anmeldetag: 17.07.1999
(51) Int. Cl.: B23D 33/02, B23D 25/12

(54) **VERFAHREN UND VORRICHTUNG ZUM FÜHREN UND STÜTZEN EINES DÜNNEN BLECHES ODER METALLBANDES**
METHOD AND DEVICE FOR GUIDING AND SUPPORTING A THIN SHEET OR METAL STRIP
PROCEDE ET DISPOSITIF POUR GUIDER ET SOUTENIR UNE FINE TOLE OU UN MINCE RUBAN DE METAL

(30) Priorität: 22.07.1998 DE 19832925
(43) Veröffentlichungstag der Anmeldung: 16.05.2001
(73) Patentinhaber: SMS SCHLOEMANN-SIEMAG AKTIENGESELLSCHAFT, 40237 Düsseldorf (DE)
(72) Erfinder: KNEPPE, Günter, D-57271 Hilchenbach (DE); MÜNKER, Jochen, D-57223 Kreuztal (DE); GRAFE, Horst, D-57271 Hilchenbach (DE); SEIDEL, Jürgen, D-57223 Kreuztal (DE)
(74) Vertreter: Valentin, Ekkehard, Dipl.-Ing.
(86) Internationale Anmeldenummer: EP9905116
(87) Internationale Veröffentlichungsnummer: WO0005020

(56) Entgegenhaltungen:
- DE-C- 944 919
- JP-A- 4 087 713
- US-A- 3 143 016
- US-A- 5 140 880

## Beschreibung

Die Erfindung betrifft ein Verfahren sowie eine Vorrichtung zum Führen und Stützen eines vergleichsweise dünnen Bleches oder Metallbandes beim Transport über eine Fördereinrichtung wie Rollgang, und/oder während, vor oder nach einem Trennvorgang beim Durchlaufen durch eine Schere, wobei das Blech bzw. Band zumindest von seiner Unterseite her mit energiereichen Strahlenbündeln eines flüssigen oder gasförmigen Mediums beaufschlagt und dabei mittels Impulsenergie gestützt und geführt wird und das Medium unter Druck durch Zuführungskanäle im Innem von Transport- und/oder Messerträgertrommeln zu Strahldüsen an deren Peripherie geleitet wird und aus diesen vor und/oder hinter den Tragbereichen der Trommeln oder möglichst dicht neben Messem der Messertrommeln schräg oder in annähemd senkrechtem Winkel relativ zum Blech oder Band in geschlossenem Strahl gegen dieses ausströmt.

Ein solches Verfahren ist aus DE-C-944 919 bekannt.

Es hat sich in der Praxis der Walztechnik als besonders schwierig erwiesen, dünne Bleche bzw. Bänder über eine Transporteinrichtung wie Rollgang bzw. zu einer Schere sicher zu führen, weil dünne Bänder dazu neigen, sich nach Verlassen eines Führungselementes abzusenken oder abzuheben und infolgedessen an eine nachfolgende Einrichtung oder an ein Führungselement anzustoßen oder hoch-zufliegen und sich dabei zu verformen. Insbesondere wird dieses Problem bei Scheren im Durchlauf der Bandspitze sowohl ohne Schnitt als auch beim Schnitt beobachtet.

Bei der Entwicklungstendenz zu immer dünneren Blechen oder Metallbändem, insbesondere aus NE-Metallen wie Kupfer oder Aluminium, aber auch bei sehr dünnen Stahlblechen, führt diese Erscheinung zu immer größeren Schwierigkeiten. Bisher wurde zu deren Überwindung noch keine praxisgerechte und sichere Lösung gefunden.

Die DE 14 27 231 offenbart eine Einrichtung zum Unterteilen von Walzgut, insbesondere von Blechstreifen in Handelslängen mittels Scheren mit einlaufseitig vor der Schere angeordnetem längs der Förderbahn beweglichem Wagen mit Klemmorgan. Der einlaufseitig angeordnete Klemmwagen mißt den Blechvorschub mittels eines Impulsgebers kontinuierlich im Impulsmaßstab. Jeweils nach Durchlaufen eines einer vorgewählten Teillänge entsprechenden Blechabschnittes durch die Schnittebene der Schere wird mittels eines digitalen Steuerorganes der Blechvorschub unterbrochen. Der oder die Klemmwagen erfassen das Transportgut von oben her und besitzen zur zeitweiligen Ankoppelung an das Transportgut Elektromagnete oder hydraulisch bzw. mit bekannten Mitteln betätigbare Zangen.

Der nächstliegende Stand der Technik geht aus dem Dokument DE-C-944 919 hervor. Darin ist ein Verfahren zum Führen und Stützen einer Materialbahn beim Transport über eine Fördereinrichtung wie Rollgang, und/oder während, vor oder nach einem Trennvorgang beim Durchlauf durch eine Schere beschrieben, wobei die Materialbahn zumindest von ihrer Unterseite her mit energiereichen Strahlenbündeln eines gasförmigen Mediums beaufschlagt und dabei mittels Impulsenergie gestützt und geführt wird. Das gasförmige Medium wird aus dem Innern der Trommeln mittels Strahldüsen an die Trommelperipherie geleitet.

Ausgehend vom vorgenannten Stand der Technik liegt der Erfindung die Aufgabe zugrunde, dünne Bleche bzw. Bänder beim Transport über eine Fördereinrichtung wie Rollgang, und/oder während, vor oder nach einem Trennvorgang beim Durchlauf durch eine Schere sicher zu führen und dabei das Medium nur in dem Bereich zur Wirkung zu bringen, der der Stabilisierung des Bandes zugute kommt, und andererseits einen wirkungslosen Medienverbrauch verhindert, zugleich eine Überflutung der Umgebung des Bandes bzw. der Schere und der Transporteinrichtung mit überschüssigem Medium vermeidet.

Zur Lösung der Aufgabe wird bei einem Verfahren der im Oberbegriff von Anspruch 1 angegebenen Art mit der Erfindung vorgeschlagen, dass das Medium unter Verwendung eines bevorzugt an einer Stimseite einer rotierbaren Transport- oder Messerträgertrommel angeordneten Drehschiebers in einer begrenzbaren Winkelstellung einer Trommel aus gegen das Blech- bzw. Metallband gerichteten Strahldüsen ausströmt.

Weitere vorteilhafte Ausgestaltungen des erfindungsgemäßen Verfahrens sind entsprechend den Merkmalen der Unteransprüche vorgesehen.

Weil die Stabilisierung des Bandes und insbesondere der Bandspitze bzw. des Bandkopfes nicht mit mechanischen Mitteln, sondern mittels Impulsenergie eines Strahlenbündels aus einem flüssigen oder gasförmigen Medium vorgenommen wird, wird eine Kollision oder Anstoß des Bandes bzw. der Bandspitze oder des Bandkopfes an ein wie auch immer geartetes Bauteil des Rollganges bzw. der Schere sicher vermieden. Die Strahldüsen können erfindungsgemäß über die gesamte Bandbreite bzw. über die gesamte Trommellänge angeordnet sein.

Mit der erfindungswesentlichen Ausgestaltung des Verfahrens, wonach das Medium unter Verwendung eines bevorzugt an einer Stimseite einer rotierbaren Transport- oder Messerträgertrommel angeordneten Drehschiebers in einer begrenzbaren Winkelstellung einer Trommel aus gegen das Blech bzw. Metallband gerichteten Strahldüsen ausströmt, wird in vorteilhafter Weise erreicht, daß das Medium nur in dem Bereich zur Wirkung gebracht wird, welcher der Stabilisierung des Bandes zugute kommt, und andererseits kein wirkungsloser Medienverbrauch stattfindet. Zugleich wird eine Überflutung der unmittelbaren Umgebung des Bandes bzw. der Schere von der Transporteinrichtung mit überschüssigem Medium verhindert.

Eine Ausgestaltung des Verfahrens sieht vor, daß bei einer Meißelschere, umfassend eine untere oder obere, mit einem Trennmeißel ausgerüstete Trommel, und eine als Amboß ausgebildete Gegentrommel, das zu trennende Blech bzw. Band mit wenigstens je einem Medienstrahl aus jeder der Trommeln bevorzugt vor und/oder hinter der Trennebene von oben und/oder von unten beaufschlagt wird. Damit wird eine besonders effiziente Stabilisierung des durchlaufenden Bandes oder Bleches erreicht, und zwar bei ökonomisch vertretbarem Aufwand an Stabilisierungsmedium.

Eine andere Ausgestaltung des Verfahrens sieht vor, daß bei Verwendung einer Abscher-Schere, umfassend je eine Messertrommel mit einem entgegengesetzte Schneiden aufweisenden Messer, das zu trennende Blech bzw. Band je vor und/oder hinter der Trennebene mit einem stützenden Medienstrahl bzw. einer Vielzahl solcher Medienstrahlen von oben und/oder von unten her beaufschlagt wird.

Damit wird zugleich das Ziel erreicht, daß das Band bzw. Blech von der Messertrommel abgehoben wird, um es besser auf die nachfolgenden Einrichtungen zu leiten. Bspw. sollen die Strahldüsen in der glatten AmboßTrommel ein Vemieten und damit ein Haften des geschnittenen Bandanfanges verhindern; bzw. auch ein Haften am Meißel oder Messer verhindem.

Und schließlich sieht das Verfahren nach der Erfindung weiter vor, daß beim Vorschub von Blech oder Band, insbesondere beim Einführen von dessen Kopf in die Schere, der Eintritt des Kopfes in den Bereich eines der Schere vorgeordneten stationären Führungskeiles sowie seine Vorschubgeschwindigkeit durch eine Signaleinrichtung ermittelt wird und der Kopf durch wenigstens eine Reihe von aus dem Führungskeil von unten her etwa senkrecht gegen das Blech bzw. Band austretenden Medienstrahlen beaufschlagt und geführt wird.

Eine Vorrichtung zum Führen und Stützen eines dünnen Bleches oder Metallbandes, insbesondere zur Durchführung des Verfahrens nach der Erfindung, entsprechend den Merkmalen nach dem Oberbegriff des Anspruchs 7 zeichnet sich dadurch aus, dass zwischen den Zuführkanälen einer Trommel und einer Quelle für unter Druck zuführbares Medium mindestens eine Pumpe und mindestens ein Drehschieber angeordnet und dieser bevorzugt an der Stirnseite einer Trommel angeordnet ist.

Weitere vorteilhafte Ausgestaltungen der Vorrichtung sind entsprechend den kennzeichnenden Merkmalen der Vorrichtungs-Unteransprüche vorgesehen.

Hierbei kann mit Vorteil von der Maßnahme Gebrauch gemacht sein, daß bei einer mit einem Messer oder einem Trennmeißel bestückten Trommel die Strahldüsen einer Reihe so dicht wie möglich neben dem Messer und/oder dem Meißel angeordnet sind.

In Fortbildung der Erfindung ist vorgesehen, dass die Führungskeile Strahldüsen an für Medium bestückte Zuführungskanäle aufweisen, und daß diese an Medienzuführungsleitungen mit einer darin angeordneten Druckpumpe und Medienquelle angeschlossen sind, und daß oberhalb des Bleches bzw. Bandes eine den Bandeinlauf beobachtende Signaleinrichtung angeordnet ist, die über eine Steuersignalleitung mit dem Motor der Pumpe in Verbindung steht.

Weitere Einzelheiten, Merkmale und Vorteile der Erfindung ergeben sich aus der nachstehenden Erläuterung einiger in den Zeichnungen schematisch dargestellter Ausführungsbeispiele. Es zeigen:
- Figur 1: in einer Darstellung nach Art eines Stammbaumes eine Transporttrommel mit Zuführungskanälen und darin angeordneten Strahldüsen, mit einem stimseitig vorgeordneten Drehschieber, Druckpumpe und Medienquelle;
- Figur 2: in Seitenansicht und teilweise im Schnitt eine Abscher-Schere mit erfindungsgemäßer Anordnung von Strahldüsen;
- Figur 3: in Seitenansicht eine ähnliche Anordnung mit einer Meißelschere in erfindungsgemäßer Ausrüstung mit Strahldüsen;
- Figur 4: in Seitenansicht eine Schere mit vor- und nachgeordneten stationären Führungskeilen und in diesen angeordneten Strahldüsen.

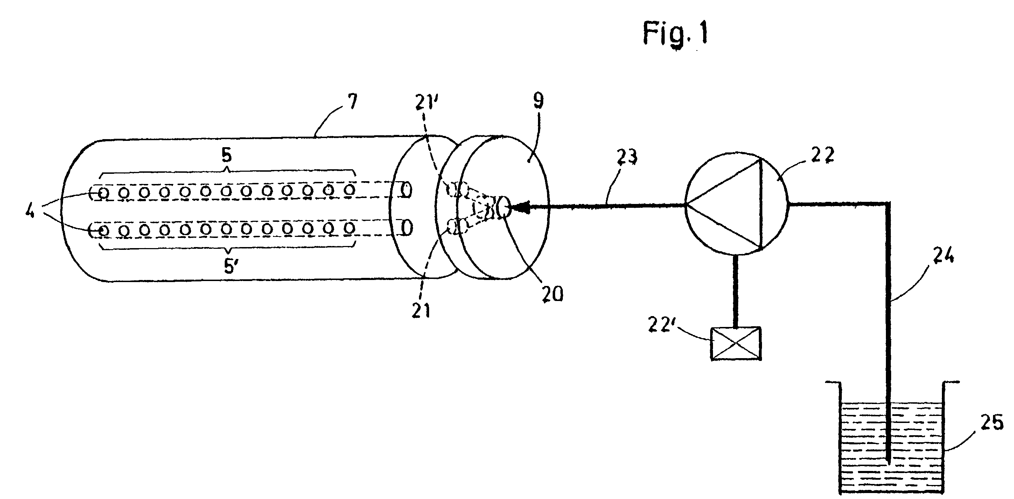

Die rein schematische Darstellung der Fig. 1 zeigt in einer Transporttrommel 7 angeordnete Zuführungskanäle 4 zur Versorgung der an ihnen ausgebildeten Strahldüsen 5 bzw. 5', Gegenüber der Stimseite der Transporttrommel 7 ist ein Drehschieber 9 angeordnet, der mit einer Mittelbohrung 20 an eine von einer Druckpumpe 22 ausgehende Förderleitung 23 für ein flüssiges Medium angeschlossen ist. Der Drehschieber 9 ist unverdrehbar angeordnet, wogegen die Transporttrommel 7 relativ zu diesem bei ihrer Funktion als Transporttrommel 7 oder Messertrommel 8 umläuft, wie dies an sich bekannt ist. Im Drehschieber 9 sind ausgehend von der Mittelbohrung 20 Anschlußkanäle 21, 21' mit Austrittsöffnungen an der der Stimseite der Transporttrommel 7 zugewandten Seite ausgebildet. Unter Druck stehendes Medium wird immer dann, wenn die Öffnungen der Zuführungskanäle 4 mit den entgegengerichteten Öffnungen der Anschlußkanäle 21 in Drehrichtung zusammenfallen, zum Durchfluß in einem begrenzten Winkelbereich freigegeben. In anderen Winkelpositionen der Transporttrommel 7 können die Zuführungskanäle 4 der Transporttrommel 7 nicht von Druckmedium durchflutet werden. Es ist auch möglich, mit den Strahldüsen unterschiedliche Spritzbreiten einzustellen.

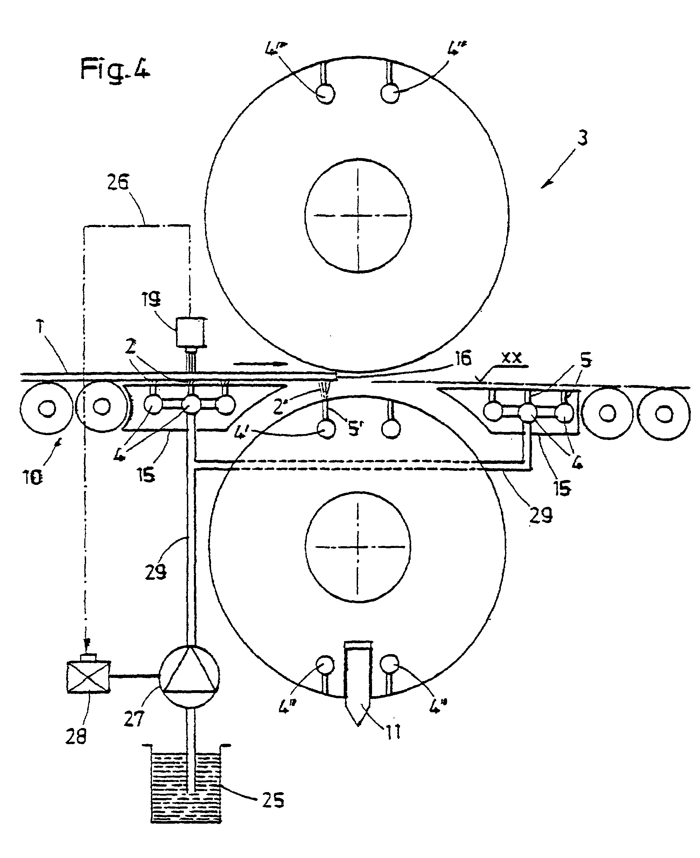

Im übrigen kann die Druckpumpe 22 mit ihrem Motor 22' von einer Signal- und Schalteinrichtung, ähnlich der in Fig. 4 gezeigten Einrichtung, bspw. nach Maßgabe eines einlaufenden Metallbandes 1, angesteuert werden. Die Druckpumpe 22 saugt durch die Saugleitung 24 ein Medium aus der Medienquelle 25 an.

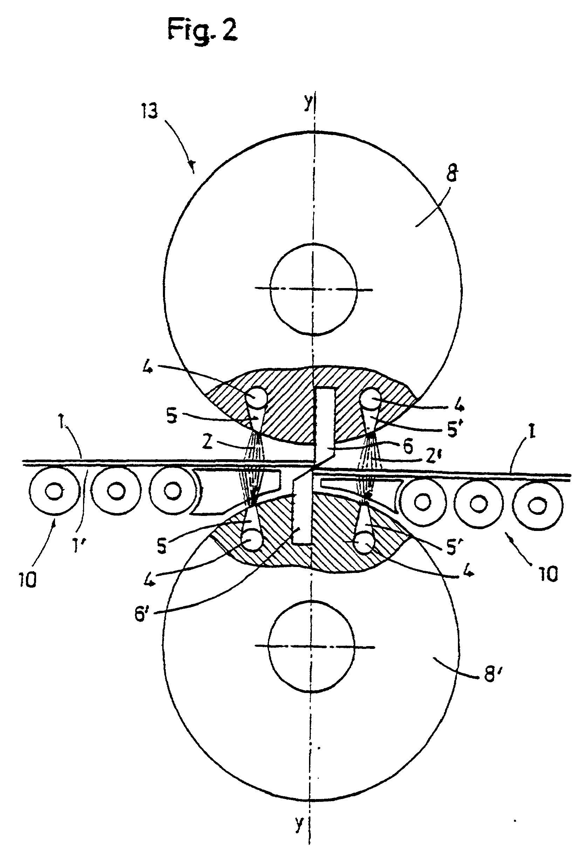

Fig. 2 zeigt als Beispiel eine Messerträgertrommel 8, 8' mit einer Vorrichtung zum Führen und Stützen eines vergleichsweise dünnen Bleches oder Metallbandes 1. Die Messerträgertrommeln sind mit Messern 6 in an sich bekannter Art ausgerüstet, die miteinander zusammenwirken und in der Schnittebene y-y bei ihrem Zusammentreffen das Metallband 1 trennen. Dieses wird auf dem Rollgang 10 transportiert und wird während des Schneidprozesses mittels der aus den Strahldüsen 5 austretenden Strahlenbündel 2, 2' von unten oder von unten und von oben geführt und stabilisiert. Die Strahldüsen 5, 5' sind so angeordnet, daß sie zu beiden Seiten der Schnittebene y-y das Band 1 in der vorgegebenen Position halten und insbesondere eine Neigung aus der Transportrichtung verhindem. Im übrigen sind bei der Abscher-Schere 13 gleiche Elemente mit gleichen Bezugsziffem bezeichnet.

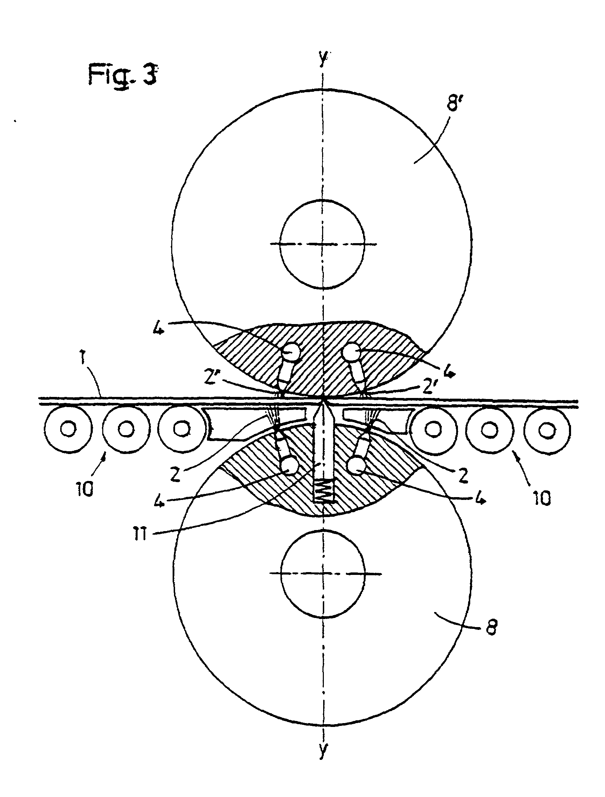

In der Fig. 3 ist eine ähnliche Anordnung gezeigt mit dem Unterschied, daß es sich bei der Schere um eine Meißelschere 3 mit einem Trennmeißel 11 handelt, wobei der damit ausgerüsteten Messertrommel 8 eine als Amboß ausgebildete Gegentrommel 8' zugeordnet ist. Dabei muß verhindert werden, daß das Band 1 beim Schnitt des Trennmeißels 11 mit der glatten Oberfläche vemietet wird oder haften bleibt, weil dann der geschnittene Bandanfang verformt werden würde. Deshalb sind an der Messertrommel 8 und insbesondere an der Amboßtrommel 8' Zuführungskanäle 4 in der bereits geschilderten achsparallelen Anordnung ausgebildet, die Strahldüsen aufweisen, aus denen Strahlenbündel 2, 2' aus flüssigem Medium austreten, die das Vemieten bzw. Haften des geschnittenen Bandanfangs mit der Gegentrommel 8' sicher verhindem.

Fig. 4 zeigt eine weitere, ähnliche Anordnung mit einer Meißelschere 3, bei welcher zwischen Schere und Rollgang 10 Führungskeile 15 angeordnet sind. Diese weisen Strahldüsen 5 für mediumbestückte Zuführungskanäle 4 auf, welche an Medienzuführungsleitungen 29 mit einer darin angeordneten Druckpumpe 27 angeschlossen sind. Oberhalb des Bleches bzw. Metallbandes 1 ist eine den Bandeinlauf mit am Bandkopf 16 beobachtende Signaleinrichtung 19 angeordnet, die über eine Signalleitung 26 mit dem Motor 28 der Druckpumpe 27, in Verbindung steht. Die Druckpumpe wird mit einer Saugleitung in an sich bekannter Weise aus der Medienquelle 25 mit flüssigem Medium versorgt. Der Durchlauf des Bandkopfes 16 des Metallbandes 1 wird von der Signaleinrichtung 19 erkannt, die daraufhin über die Signalleitung 26 den Schalter für den Motor 28 aktiviert und damit die Druckpumpe 27 anlaufen läßt. Diese fördert das Druckmedium durch die Zufuhrleitung 29 über die Zuführungskanäle 4 zu den Strahldüsen 5. Das Prinzip gilt für alle Strahldüsen, auch die in den Trommeln. Eine Signaleinrichtung muß den Bandkopf und den Schnitt erfassen. Die Strahldüsen werden dann am Bandkopf und -schnitt nur kurzzeitig beaufschlagt. Das Signal kann auch von einer sowieso schon vorhandenen Einrichtung benutzt werden.

Femer steht die Meißeltrommel der Meißelschere 3 über ihren Drehschieber 9 (in Fig. 4 nicht gezeigt) mit dem Zuführungskanat 4' und der Strahidüse 5' derart in Verbindung, daß ein gebündelter Medienstrahl 2' von unten her gegen das Metallband 1 im Bereich des Bandkopfes 16 mit hoher Energie austritt und verhindert, daß das vergleichsweise dünne und biegsame Band 1 sich nach unten abbiegt und gegen den rechtsseitigen Führungskeil 15' anstößt und dabei verbogen wird.

Erst im weiteren Verlauf des Bandtransportes wird nach vorgegebener Zeit oder abgemessenem Vorlauf des Metallbandes 1 die Meißelschere 3 aktiviert und eine vorgegebene Bandlänge abgetrennt, wobei dann die bisher außerhalb Funktion stehenden Zuführkanäle 4" der Meißeltrommel und der Gegentrommel im Zusammenwirken mit dem Drehschieber 9 die Führung des Bandes 1 durch energiereiche Medienstrahlen übemehmen.

## Patentansprüche

1. Verfahren zum Führen und Stützen eines vergleichsweise dünnen Bleches oder Metallbandes (1) beim Transport über eine Fördereinrichtung (10) wie Rollgang, und/oder während, vor oder nach einem Trennvorgang beim Durchlauf durch eine Schere (3), wobei das Blech bzw. Band (1) zumindest von seiner Unterseite (1') her mit energiereichen Strahlenbündeln (2, 2') eines flüssigen oder gasförmigen Mediums beaufschlagt und dabei mittels Impulsenergie gestützt und geführt wird und das Medium unter Druck durch Zuführungskanäle (4) im Innem von Transport- und/oder Messerträgertrommeln (7, 8) zu Strahldüsen (5) an deren Peripherie geleitet wird und aus diesen vor und/oder hinter den Tragbereichen der Trommeln oder möglichst dicht neben Messern (6) der Messertrommeln (8) schräg oder in annähernd senkrechtem Winkel relativ zum Blech oder Band (1) in geschlossenem Strahl (2) gegen dieses ausströmt,
**dadurch gekennzeichnet,**
**daß** das Medium unter Verwendung eines bevorzugt an einer Stimseite einer rotierbaren Transport- oder Messerträgertrommel (7, 8) angeordneten Drehschiebers (9) in einer begrenzbaren Winkelstellung einer Trommel (7, 8) aus gegen das Blech- bzw. Metallband (1) gerichteten Strahldüsen (5) ausströmt.

2. Verfahren nach Anspruch 1,
**dadurch gekennzeichnet,**
**daß** eine Signaleinrichtung den Bandkopf oder den Bandschnitt erfaßt und die Strahldüsen (5) dann am Bandkopf oder Bandschnitt nur kurzzeitig mit Medium beaufschlagt werden.

3. Verfahren nach Anspruch 1 oder 2,
**dadurch gekennzeichnet,**
**daß** bei Transporttrommeln eines Rollgangs die Strahldüsen beim jeweiligen Durchlauf des Bandkopfes kurzzeitig nacheinander mit Medium beaufschlagt werden.

4. Verfahren nach einem oder mehreren der Ansprüche 1 bis 3,
**dadurch gekennzeichnet,**
**daß** bei einer Meißelschere, umfassend eine untere oder obere, mit einem Trennmeißel (11) ausgerüstete Trommel (8), und eine als Amboß ausgebildete Gegentrommel (8'), das zu trennende Blech bzw. Band (1) mit wenigstens je einem Medienstrahl (2, 2') aus jeder der Trommeln (8, 8') bevorzugt vor und/oder hinter der Trennebene (y-y) von oben und/oder von unten her beaufschlagt wird.

5. Verfahren nach einem oder mehreren der Ansprüche 1 bis 3,
**dadurch gekennzeichnet,**
**daß** bei einer Abscher-Schere (13), umfassend je eine Messertrommel (8, 8') mit einem entgegengesetzte Schneiden aufweisenden Messer (6, 6'), das zu trennende Blech bzw. Band (1) je vor und/oder hinter der Trennebene (y-y) mit einem stützenden Medienstrahl bzw. einer Vielzahl solcher Medienstrahlen (2, 2') von oben und/oder von unten her beaufschlagt wird.

6. Verfahren nach einem oder mehreren der Ansprüche 1 bis 4,
**dadurch gekennzeichnet,**
**daß** beim Vorschub von Blech oder Band (1), insbesondere beim Einführen von dessen Kopf (16) in die Meißelschere (3), der Eintritt des Kopfes (16) in den Bereich eines der Meißelschere (3) vorgeordneten stationären Führungskeiles (15) sowie seine Vorschubgeschwindigkeit durch eine Signaleinrichtung (19) ermittelt wird und der Kopf (16) durch wenigstens eine Reihe von aus dem Führungskeil (15) von unten her etwa senkrecht gegen das Blech bzw. Band (1) austretenden Medienstrahlen (2, 2') beaufschlagt und geführt wird.

7. Vorrichtung zum Führen und Stützen eines dünnen Bleches oder Metallbandes (1), insbesondere zur Durchführung des Verfahrens nach der Erfindung, umfassend Transporttrommeln und/oder Messerträgertrommeln (7, 8), die an ihrer Peripherie in achsparalleler Ausrichtung wenigstens in einer Reihe angeordnete Strahldüsen (5) aufweisen, die bei Beaufschlagung mit einem Medium gegen die Ober- und/oder Unterfläche des Bleches bzw. Metallbandes weisen, wobei die Strahldüsen (5) von im Innem der Trommeln (7, 8) verlaufenden Zuführkanälen (4) an außerhalb der Trommeln vorgesehene Quellen (25) mit Anschlußorganen (21, 21') für unter Druck zuführbares Medium verbindbar sind,
**dadurch gekennzeichnet,**
**daß** zwischen den Zuführkanälen (4) einer Trommel (7, 8) und einer Quelle (25) für unter Druck zuführbares Medium mindestens eine Pumpe (22) und mindestens ein Drehschieber (9) angeordnet und dieser bevorzugt an einer Stirnseite einer Trommel (7, 8) angeordnet ist.

8. Vorrichtung nach Anspruch 7,
wobei zwischen der Meißelschere (3) und dem Rollgang (10) Führungskeile (15) angeordnet sind,
**dadurch gekennzeichnet,**
**daß** die Führungskeile (15) Strahldüsen (5) an für Medium bestückte Zuführungskanäle (4) aufweisen, und daß diese an Medienzuführungsleitungen (29) mit einer darin angeordneten Druckpumpe (27) und Medienquelle (25) angeschlossen sind, und daß oberhalb des Bleches bzw. Bandes (1) eine den Bandeinlauf beobachtende Signaleinrichtung (19) angeordnet ist, die über eine Steuersignalleitung (26) mit dem Motor (28) der Pumpe (27), in Verbindung steht.

9. Vorrichtung nach Anspruch 8,
**dadurch gekennzeichnet,**
**daß** die Strahlbreite der Strahldüsen (5) einstellbar ist.

10. Vorrichtung nach einem oder mehreren der Ansprüche 7 bis 9,
**dadurch gekennzeichnet,**
**daß** bei Transporttrommeln eines Rollgangs die Strahldüsen radial am Umfang der Trommel verteilt angeordnet sind.

## Claims

1. Method of guiding and supporting a comparatively thin metal sheet or metal strip (1) during transport by way of a conveying device (10) such as a roller path, and/or during, before or after a separating process on running through a cutter (3), wherein the metal sheet or strip (1) is acted on at least from its underside (1') by energy-rich jets (2, 2') of a liquid or gaseous medium and in that case supported and guided by means of pulsed energy and the medium is conducted under pressure through feed channels (4) in the interior of transport and/or knife carrier drums (7, 8) to nozzles (5) at the peripheries thereof and flows out of these in front of and/or behind the carrier regions of the drums or as close as possible to the knives (6) of the knife drums (8) obliquely or at an approximately perpendicular angle relative to the metal sheet or strip (1) in a closed jet against this, **characterised in that** the medium flows out of nozzles (5), which are directed against the metal plate or metal sheet (1), at a confinable angular setting of a drum (7, 8) with use of a rotary slide valve (9) preferably arranged at an end face of a rotatable transport or knife carrier drum (7, 8).

2. Method according to claim 1, **characterised in that** a signal device detects the strip head or strip cut and the jets (5) are then acted on at the strip head or strip cut by medium only briefly.

3. Method according to claim 1 or 2, **characterised in that** in the case of transport drums of a roller path the nozzles are acted on by medium briefly in succession during the respective transit of the strip head.

4. Method according to one or more of claims 1 to 3, **characterised in that** in the case of a chisel cutter, comprising a lower or an upper drum (8) equipped with a separating chisel (11) and a counter-drum (8') constructed as an anvil, the metal sheet or strip (1) to be separated is acted on from above and/or below by at least one jet (2, 2') of medium from each of the drums (8, 8") preferably in front of and/or behind the separating plane (y-y).

5. Method according to one or more of claims 1 to 3, **characterised in that** in the case of a shearing cutter (13), comprising knife drums (8, 8') with respective knives (6, 6") having opposed cutting edges, the metal sheet or strip (1) is acted on from above and/or below respectively in front of and/or behind the separating plane (y-y) by a supporting jet of medium or a plurality of such jets (2, 2') of medium.

6. Method according to one or more of claims 1 to 4, **characterised in that** on advance of metal sheet or strip (1), particularly on introduction of the head (16) thereof into the chisel cutter (3), the entry of the head (16) into the region of a stationary guide wedge arranged upstream of the chisel cutter (3) as well as its speed of advance is ascertained by a signal device (19) and the head (16) is acted on and guided by a series of jets (2, 2') of medium issuing from the guide wedge (15) from below approximately perpendicularly against the metal sheet or strip (1).

7. Device for guiding and supporting a thin metal sheet or metal strip (1), particularly for carrying out the method according to the invention, comprising transport drums and/or knife carrier drums (7, 8) which have, at their periphery in axially parallel orientation, jets (5) which are arranged in at least row and which on loading with a medium point towards the upper and/or lower surface of the metal sheet or metal strip, wherein the jets (5) are connectible by feed channels (4), which extend in the interiors of the drums (7, 8), to sources (25), which are provided outside the drums, with connecting elements (21, 21') for medium feedable under pressure, **characterised in that** at least one pump (22) and at least one rotary slide valve (9) are arranged between the feed channels (4) of a drum (7, 8) and a source (25) for a medium feedable under pressure and the valve is preferably arranged at an end face of a drum (7, 8).

8. Device according to 7, **characterised in that** guide wedges (15) are arranged between the chisel cutter (3) and the roller path (10), **characterised in that** the guide wedges (15) have nozzles (5) at feed channels (4) equipped for medium and that these are connected to medium feed ducts (29) with a pressure pump (27) arranged therein and source (25) of medium and that arranged above the metal sheet or plate (1) is a signal device (19) which monitors the strip entry and which is connected with the motor (28) of the pump (27) by way of a control signal line (26).

9. Device according to claim 8, **characterised in that** the jet width of the nozzles (5) is adjustable.

10. Device according to one or more of claims 7 to 9, **characterised in that** in the case of transport drums of a roller path the nozzles are arranged to be radially distributed at the circumference of the drum.

## Revendications

1. Procédé pour guider et soutenir une tôle ou une bande en métal (1) relativement mince lors du transport sur une installation de transport (10) telle qu'un train de rouleaux et/ou pendant, avant ou après un processus de séparation lors du passage dans une cisaille (3), la tôle ou la bande (1) étant sollicitée au moins au niveau de sa face inférieure (1') par des faisceaux de jets (2, 2') riches en énergie d'un agent liquide ou gazeux et étant ainsi soutenue et guidée au moyen d'une énergie par impulsions et l'agent étant guidé sous pression via des canaux d'alimentation (4) de l'intérieur de tambours de transport et/ou de support de couteaux (7, 8) vers des éjecteurs (5) à leur périphérie et s'écoulant de ceux-ci avant et/ou après les zones de support des tambours ou le plus près possible des couteaux (6) des tambours à couteaux (8), dans un angle incliné ou quasiment perpendiculaire par rapport à la tôle ou à la bande (1) dans un jet fermé (2) contre ladite tôle ou bande, **caractérisé en ce que** l'agent s'écoule des éjecteurs (5) dirigés contre la tôle ou la bande métallique (1) dans une position angulaire pouvant être limitée d'un tambour (7, 8) en utilisant un curseur rotatif (9) disposé de préférence au niveau de la face avant d'un tambour de transport ou de support de couteaux (7, 8) rotatif.

2. Procédé selon la revendication 1, **caractérisé en ce qu'**un dispositif de signalisation agrippe la tête de la bande ou la partie découpée de la bande et que les éjecteurs (5) au niveau de la tête de la bande ou de la partie découpée ne sont alors alimentés que pendant un court laps de temps avec l'agent.

3. Procédé selon la revendication 1 ou 2, **caractérisé en ce que** dans le cas de tambours de transport d'un train de rouleaux, les éjecteurs sont alimentés l'un après l'autre pendant un court laps de temps avec l'agent lors de chaque passage de la tête de la bande.

4. Procédé selon l'une ou plusieurs des revendications 1 à 3, **caractérisé en ce que** dans le cas d'une cisaille à burin, comprenant un tambour (8) inférieur et supérieur, équipé d'un burin de séparation (11) et un contre-tambour (8') exécuté comme enclume, la tôle ou la bande (1) à séparer est sollicitée par au moins un jet d'agent (2, 2') de chacun des tambours (8, 8'), de préférence avant et/ou derrière le plan de séparation (y-y), par le dessus et/ou par le dessous.

5. Procédé selon l'une ou plusieurs des revendications 1 à 3, **caractérisé en ce que** dans le cas d'une cisaille de tranchage (13), comprenant un tambour à couteaux (8, 8') avec un couteau (6, 6') présentant un tranchant opposé, la tôle ou la bande (1) à séparer est sollicitée avant et/ou après le plan de séparation (y-y) avec un jet d'agent ou une multitude de jets d'agent (2, 2') de soutien, par le dessus et/ou par le dessous.

6. Procédé selon l'une ou plusieurs des revendications 1 à 4, **caractérisé en ce que**, lors de l'avancement de la tôle ou de la bande (1), en particulier lors de l'introduction de sa tête (16) dans la cisaille à burin (3), l'introduction de la tête (16) dans la zone d'une clavette de guidage (15) stationnaire placée en amont de la cisaille à buron (3) ainsi que sa vitesse d'avancement sont déterminées par un dispositif de signalisation (19) et **en ce que** la tête (16) est sollicitée et guidée par au moins une série de jets d'agent (2, 2') sortant de la clavette de guidage (15) du dessous, de manière environ perpendiculaire contre la tôle ou la bande (1).

7. Dispositif pour le guidage et le soutien d'une tôle ou d'une bande métallique (1) mince, en particulier pour la réalisation du procédé selon l'invention, comprenant des tambours de transport et/ou des tambours de support de couteaux (7, 8), qui présentent en leur périphérie, dans une orientation parallèle à l'axe, des éjecteurs (5) au moins disposés en série, qui sont dirigés lors de la sollicitation avec un agent contre la face supérieure et/ou inférieure de la tôle ou de la bande métallique, les éjecteurs (5) pouvant être raccordés par des canaux d'alimentation (4) s'étendant à l'intérieur des tambours (7, 8) à des sources (25) prévues à l'extérieur des tambours avec des organes de raccordement (21, 21') pour l'agent alimenté sous pression, **caractérisé en ce qu'**on a disposé entre les canaux d'alimentation (4) d'un tambour (7, 8) et une source (25) pour l'agent à alimenter sous pression au moins une pompe (22) et au moins un curseur rotatif (9) et que celui-ci est de préférence disposé sur une face d'un tambour (7, 8).

8. Dispositif selon la revendication 7, en disposant des clavettes de guidage (15) entre la cisaille à buron (3) et le train de rouleaux (10), **caractérisé en ce que** les clavettes de guidage (15) présentent des éjecteurs (5) sur des canaux d'alimentation (4) alimentés en agent et **en ce que** ces conduites d'alimentation (29) d'agent sont raccordées à une pompe sous pression (27) et une source d'agent (25) disposée dans celles-ci et **en ce qu'**un dispositif de signalisation (19) surveillant l'introduction de la bande est disposé au-dessus de la tôle ou de la bande (1), qui est raccordé via une conduite de signal de commande avec le moteur (28) de la pompe (27).

9. Dispositif selon la revendication 8, **caractérisé en ce que** la largeur de jet des éjecteurs (5) est réglable.

10. Dispositif selon l'une ou plusieurs des revendications 7 à 9, **caractérisé en ce que** dans le cas de tambours de transport d'un train de rouleau, les éjecteurs sont disposés en étant répartis radialement à la périphérie du tambour.
